# FASCICULE DE BREVET EUROPEEN

(11) **EP 3 219 090 B1**
(45) Date de publication et mention de la délivrance du brevet: **26.09.2018**
(21) Numéro de dépôt: 15801901.8
(22) Date de dépôt: 06.11.2015
(51) Int. Cl.: H04M 3/436

(54) **PROCÉDÉ ET DISPOSITIF DE COMMUNICATION**
KOMMUNIKATIONSVERFAHREN UND -VORRICHTUNG
COMMUNICATION METHOD AND DEVICE

(30) Priorité: 13.11.2014 FR 1460966
(43) Date de publication de la demande: 20.09.2017
(73) Titulaire: Orange, 75015 Paris (FR)
(72) Inventeur: LE HUEROU, Emmanuel, F-22700 Saint Quay Perros (FR); BEGOC BECAM, Nathalie, F-22300 Lannion (FR); BEAUFILS, Eric, F-22450 Langoat (FR); TOUTAIN, François, F-22300 Lannion (FR)
(86) Numéro de dépôt international: PCT/FR2015/053006
(87) Numéro de publication internationale: WO 2016/075396

(56) Documents cités:
- WO-A1-02/09402
- WO-A1-2005/083995
- GB-A- 2 461 041

## Description

Lorsqu'un utilisateur appelé reçoit une demande de communication sur son terminal, par exemple un appel audio ou vidéo, si l'utilisateur appelé est disponible pour communiquer et qu'il souhaite accepter la demande de communication, la communication acceptée est établie selon un mode de communication proposé dans la demande de communication initiale. Par exemple, pour un appel audio, la communication acceptée est établie en mode audio. Pour un appel vidéo, la communication acceptée est établie en mode vidéo ou en mode audio seulement si, lors de l'acceptation de la demande de communication, l'utilisateur appelé a sélectionné seulement la composante audio du mode vidéo proposé dans la demande de communication.

Cependant, il se peut que l'utilisateur appelé soit disponible pour communiquer mais qu'il ne souhaite pas établir de communication selon le mode de communication proposé (mode audio ou vidéo) dans la demande de communication. Un exemple est décrit dans le document GB2461041 (IntelIProp LTD), publié le 23 Décembre 2009.

Par exemple, un tel cas se présente parce que le mode de communication proposé est trop intrusif pour l'utilisateur appelé qui préfère communiquer de manière non verbal. Ou bien, le mode de communication proposé n'est pas adapté au contexte de l'utilisateur appelé. Par exemple, si l'utilisateur appelé reçoit un appel audio et qu'il assiste à une conférence, une communication en mode audio n'est pas appropriée.

Dans de tels cas, l'utilisateur appelé peut refuser la demande de communication reçue en demandant la redirection de la demande de communication vers la messagerie associée à son terminal.

Lors du refus de la demande de communication, l'utilisateur appelé peut également envoyer un message de réponse à l'utilisateur appelant en sélectionnant par exemple un bouton de réponse discrète pendant la phase de réception de la demande de communication. Une telle phase correspond à la phase de sonnerie du terminal indiquant la réception de la demande de communication.

Le terminal de l'utilisateur appelé affiche alors un menu dans lequel l'utilisateur appelé peut sélectionner un message prédéfini, par exemple « je suis en réunion » ou « je t'appelle plus tard » ou bien sélectionner une option pour rédiger un nouveau message. Le message sélectionné ou rédigé par l'utilisateur appelé est ensuite transmis sous la forme d'un SMS (pour Short Message Service) au terminal de l'utilisateur appelant. Ce mécanisme permet d'indiquer à l'utilisateur appelant la raison de l'échec de son appel. Cependant, selon ce mécanisme, il est mis fin à la communication initialement demandée. Si l'utilisateur appelant souhaite communiquer avec l'utilisateur appelé, une nouvelle demande de communication doit être initiée.

Pendant la durée de rédaction du message de réponse, l'utilisateur appelant voit sa demande de communication échouée mais sans en connaitre la raison tant qu'il n'a pas reçu le message de réponse de l'utilisateur appelé. De plus, pour connaitre le contenu du message de réponse reçu par le terminal de l'utilisateur appelant, il est nécessaire pour l'utilisateur appelant d'interagir sur son terminal pour changer d'application de communication et ouvrir l'application de communication lui permettant de lire le message de réponse. De plus, lors de la réception du message de réponse, l'utilisateur appelant ne sait pas forcément que le message de réponse reçu est envoyé par l'utilisateur appelé qu'il vient juste d'essayer de joindre.

Du côté de l'utilisateur appelant, un tel mécanisme de réponse discrète peut provoquer une certaine frustration car son besoin de communiquer de manière synchrone, c'est-à-dire avec des échanges en temps réel, n'est pas satisfait.

Du côté de l'utilisateur appelé, un tel mécanisme de réponse discrète peut également être source de problème, voire d'erreurs en cas de sélection d'un mauvais mode de réponse, car l'utilisateur appelé doit sélectionner son mode de réponse (acceptation en mode audio, refus de la communication, sélection d'un message de réponse parmi une liste de messages) pendant la durée de la sonnerie de son terminal indiquant qu'une demande de communication est reçue. Souvent, lorsque l'utilisateur appelé entend la sonnerie de son terminal, plusieurs secondes lui sont d'abord nécessaires pour accéder à son terminal, puis pour identifier l'origine de l'appel reçu, ensuite pour déterminer la réponse à apporter à un tel appel en fonction du contexte de l'utilisateur (s'il est en réunion, en voiture, dans la rue, au travail, etc...) et éventuellement de l'origine de l'appel, et enfin pour sélectionner la réponse déterminée. Toutes ces étapes doivent être faites par l'utilisateur appelé pendant la durée de sonnerie de son terminal, avant que la demande de communication ne soit redirigée vers la messagerie associée au terminal appelé. Quand l'utilisateur appelé reçoit une demande de communication, il est alors souvent dans un état de stress qui ne lui permet pas de faire un choix optimisé en fonction de son contexte et de l'origine de l'appel lorsqu'un trop grand nombre de choix de mode de réponses lui est proposé pendant la phase de sonnerie de son terminal. L'utilisateur peut alors sélectionner sur son terminal appelé un mode de réponse incorrect, c'est-à-dire un mode de réponse ne correspondant pas à celui qu'il souhaitait.

Un des buts de l'invention est d'apporter des améliorations par rapport à l'état de la technique.

Elle propose à cet effet un procédé de communication entre un terminal émetteur d'une demande de communication et un terminal récepteur, comprenant les étapes suivantes:
- réception par le terminal récepteur de la demande de communication, la demande de communication comprenant un mode de communication proposé pour établir la communication demandée,
- suite à la détection d'une interaction utilisateur indiquant la sélection d'un autre mode de communication, l'autre mode de communication étant différent du mode de communication proposé et non compris dans le mode de communication proposé, envoi au terminal émetteur d'un message d'acceptation, le message d'acceptation comprenant ledit autre mode de communication sélectionné,
- suite à l'envoi du message d'acceptation, modification de l'affichage d'un dispositif d'affichage associé au terminal récepteur de sorte qu'une interface de communication relative audit autre mode de communication soit affichée,
- communication entre le terminal récepteur et le terminal émetteur selon ledit autre mode de communication, via ladite interface de communication.

Ainsi selon l'invention, l'utilisateur du terminal récepteur peut accepter la demande de communication en sélectionnant un autre mode de communication différent du mode de communication proposé dans la demande de communication. Un tel autre mode de communication est un mode de communication qui n'est pas compris dans le mode de communication proposé, c'est-à-dire qu'il ne correspond pas à une composante du mode de communication proposé. Par exemple, si la demande de communication propose le mode de communication vidéo, un mode de communication audio est une composante d'un tel mode de communication vidéo qui comprend de manière connue une composante audio et une composante vidéo constituée de séquences d'images. En revanche, un mode de communication textuel ou de dessin n'est pas une composante d'un mode de communication vidéo.

L'invention permet ainsi d'adapter le mode de communication de la communication à établir en fonction des préférences de l'utilisateur du terminal récepteur tout en satisfaisant le besoin de communication synchrone, ou en temps réel, de l'utilisateur du terminal émetteur de la demande de communication.

Bien que le mode de communication selon lequel la communication est établie soit différent du mode de communication proposé initialement dans la demande de communication, l'utilisateur du terminal récepteur peut quand même communiquer en temps réel avec l'utilisateur du terminal émetteur.

Selon l'invention, grâce à une seule interaction utilisateur de sélection de l'autre mode de communication, l'affichage du terminal récepteur bascule automatiquement sur une interface de communication relative à l'autre mode de communication. L'utilisateur du terminal récepteur n'a pas besoin d'initier une nouvelle demande de communication pour changer le mode de la communication demandée.

L'interaction utilisateur peut être faite par l'activation d'une touche ou d'un bouton sur une interface du terminal récepteur. En variante, l'interaction utilisateur peut être faite par une commande vocale. Les différents modes ou caractéristiques de réalisation mentionnés ci-après peuvent être ajoutés indépendamment ou en combinaison les uns avec les autres, aux étapes du procédé de communication défini ci-dessus.

Selon un mode particulier de réalisation de l'invention, le mode de communication proposé est un mode de communication audio ou vidéo.

Selon un autre mode particulier de réalisation de l'invention, l'autre mode de communication est un mode de communication textuel ou de dessin en temps réel.

Ce mode particulier de réalisation de l'invention est avantageux lorsque l'utilisateur du terminal récepteur préfère communiquer par échanges de messages texte temps réel ou de dessins temps réel, par exemple via une session de messagerie instantanée.

Ce mode particulier de réalisation de l'invention est également avantageux lorsque le contexte de l'utilisateur du terminal récepteur ne lui permet pas de communiquer verbalement ou qu'il ne doit pas faire de bruit pour communiquer.

Selon un autre mode particulier de réalisation de l'invention, le procédé de communication comprend une étape de détermination de l'autre mode de communication, en fonction d'une indication associée à un utilisateur du terminal émetteur de la demande de communication, ladite indication étant stockée sur le terminal récepteur.

Ce mode particulier de réalisation de l'invention permet d'adapter l'autre mode de communication proposé par le terminal récepteur à l'utilisateur du terminal récepteur lors de la réception de la demande de communication en fonction par exemple des habitudes de communication entre l'utilisateur du terminal émetteur et de l'utilisateur du terminal récepteur. Ce mode particulier de réalisation de l'invention est avantageux en ce qu'il permet de limiter le nombre de choix de réponses possibles à une demande de communication en ne proposant à l'utilisateur du terminal récepteur qu'un autre mode de communication. Par exemple, seul trois modes de réponses possibles (acceptation selon le mode de communication proposé initialement dans la demande de communication, refus de la demande de communication, acceptation selon l'autre mode de communication) sont proposés à l'utilisateur du terminal récepteur lors de la réception de la demande de communication. Ainsi, l'utilisateur du terminal récepteur n'est pas submergé par un grand nombre de modes de communication possibles et peut décider rapidement la réponse à apporter à la demande de communication reçue.

Selon un autre mode particulier de réalisation de l'invention, le procédé de communication comprend en outre une étape d'obtention d'un paramètre représentatif du temps restant avant le rejet de la demande de communication par le terminal récepteur et une étape de modification de l'affichage du dispositif d'affichage de sorte à afficher le paramètre obtenu.

Ce mode particulier de réalisation de l'invention permet d'informer l'utilisateur du terminal récepteur le temps restant avant le rejet de la demande de communication. Ainsi, l'utilisateur du terminal récepteur sait de combien de temps il dispose pour pouvoir sélectionner un mode de réponse avant que la demande de communication ne soit rejetée par le terminal récepteur. Un tel rejet correspond à une sélection automatique d'un mode de réponse par le terminal récepteur.

Selon un autre mode particulier de réalisation de l'invention, l'autre mode de communication est un mode de communication textuel ou de dessin et lorsqu'un message est composé via l'interface de communication affichée par le dispositif d'affichage associé au terminal récepteur, le message composé est transmis au terminal émetteur caractère par caractère.

Ce mode particulier de réalisation de l'invention permet d'informer l'utilisateur du terminal émetteur qu'un message textuel est en cours de composition. Ainsi, , l'utilisateur du terminal émetteur peut commencer à lire le message de l'utilisateur du terminal récepteur dès le début de la composition du message.

L'invention concerne également un procédé de demande d'une communication entre un terminal émetteur de ladite demande de communication et un terminal récepteur, la demande de communication comprenant un mode de communication proposé pour établir la communication demandée, le procédé comprenant :
- une étape de réception par le terminal émetteur d'un message d'acceptation de la demande de communication, le message d'acceptation comprenant un autre mode de communication différent du mode de communication proposé,
- suite à l'étape de réception du message d'acceptation, une étape de modification de l'affichage d'un dispositif d'affichage associé au terminal émetteur de sorte qu'une interface de communication relative audit autre mode de communication soit affichée,
- une étape de communication entre le terminal récepteur et le terminal émetteur selon ledit autre mode de communication, via ladite interface de communication.

L'affichage du terminal émetteur bascule automatiquement sur une interface de communication relative à l'autre mode de communication. L'utilisateur du terminal émetteur n'a pas besoin d'initier une nouvelle demande de communication ou d'interagir sur son terminal pour communiquer avec l'utilisateur du terminal récepteur ou pour connaitre la réponse de l'utilisateur du terminal récepteur.

L'invention concerne aussi un terminal de communication comprenant un dispositif comprenant :
- un module de communication apte :
   ∘ à recevoir une demande de communication en provenance d'un terminal émetteur, la demande de communication comprenant un mode de communication proposé pour établir la communication demandée,
   ∘ à envoyer, sur commande d'un module de traitement, au terminal émetteur un message d'acceptation comprenant un autre mode de communication différent du mode de communication proposé,
   ∘ à communiquer avec le terminal émetteur selon ledit autre mode de communication, via une interface de communication relative audit autre mode de communication,
- le module de traitement étant apte :
   ∘ à commander le module de communication suite à une interaction utilisateur effectuée sur le terminal de communication indiquant la sélection dudit autre mode de communication,
   ∘ à commander une interface d'affichage pour modifier l'affichage d'un dispositif d'affichage associé au terminal de communication de sorte que ladite interface de communication relative audit autre mode de communication soit affichée.

L'invention concerne également un terminal de demande d'une communication comprenant un dispositif comprenant :
- un module de communication apte :
   ∘ à envoyer à un terminal récepteur une demande de communication comprenant un mode de communication proposé pour établir la communication demandée,
   ∘ à recevoir un message d'acceptation de la demande de communication, le message d'acceptation comprenant un autre mode de communication différent du mode de communication proposé,
   ∘ à communiquer avec le terminal récepteur selon ledit autre mode de communication, via une interface de communication relative audit autre mode de communication,
- un module de traitement apte à commander une interface d'affichage suite à la réception du message d'acceptation, pour modifier l'affichage d'un dispositif d'affichage associé au terminal de sorte que ladite interface de communication relative audit autre mode de communication soit affichée.

Dans un mode particulier de réalisation de l'invention, les différentes étapes du procédé de communication et de demande de communication sont mises en oeuvre par des instructions de programmes d'ordinateurs.

En conséquence, l'invention vise aussi des programmes d'ordinateur sur un support d'informations, ces programmes étant susceptibles d'être mis en oeuvre respectivement dans un terminal ou plus généralement dans un ordinateur, ces programmes comportant respectivement des instructions adaptées à la mise en oeuvre des différentes étapes du procédé de communication et des différentes étapes du procédé de demande de communication qui viennent d'être décrits.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique ou électronique, par exemple une clé USB ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé de communication ou du procédé de demande de communication en question.

Les avantages du terminal de communication, du terminal de demande de communication, du programme d'ordinateur comportant des instructions adaptées à la mise en oeuvre des différentes étapes du procédé de communication et du programme d'ordinateur comportant des instructions adaptées à la mise en oeuvre des différentes étapes du procédé de demande de communication sont identiques à ceux présentés en relation avec le procédé de communication et à ceux présentés en relation avec le procédé de demande de communication selon l'un quelconque des modes particuliers de réalisation mentionnés ci-dessus.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 illustre un environnement de mise en oeuvre de l'invention selon un mode particulier de réalisation de l'invention,
- la figure 2 illustre schématiquement des étapes du procédé de demande d'une communication et des étapes du procédé de communication selon un mode particulier de réalisation de l'invention,
- les figures 3A, 3B et 3C illustrent schématiquement une interface d'un terminal mettant en oeuvre le procédé de demande de communication selon un mode particulier de réalisation de l'invention,
- les figures 4A et 4B illustrent schématiquement une interface d'un terminal mettant en oeuvre le procédé de communication selon un mode particulier de réalisation de l'invention,
- la figure 5 illustre un dispositif apte à mettre en oeuvre le procédé de demande de communication selon un mode particulier de réalisation de l'invention.
- la figure 6 illustre un dispositif apte à mettre en oeuvre le procédé de communication selon un mode particulier de réalisation de l'invention.

### Description d'un mode particulier de réalisation de l'invention

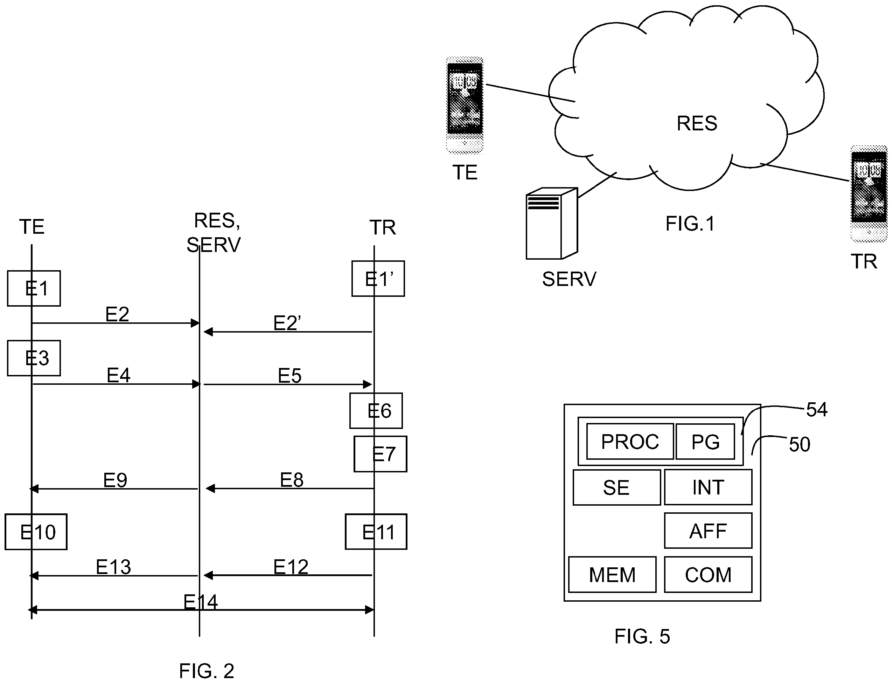

La figure 1 illustre un environnement de mise en oeuvre de l'invention selon un mode particulier de réalisation de l'invention. L'environnement décrit en figure 1 comprend un réseau de communication RES permettant d'échanger des données et d'établir des communications entre des terminaux connectés au réseau de communication RES. Par exemple, le réseau de communication RES est un réseau de communications IP mobile de type 4G ou un réseau de communication IP fixe. Le réseau de communication RES est par exemple un réseau de communication IP basé sur une architecture IMS (pour IP Multimedia Subsystem en anglais).

Le réseau de communication RES peut aussi être un groupe de réseaux de communication interconnectés entre eux par des serveurs d'interconnexion (non représentés). L'environnement de la figure 1 comprend aussi des terminaux TE et TR connectés au réseau de communication RES. Les terminaux TE et TR peuvent être tout type de terminaux permettant d'établir une communication téléphonique ou visiophonique, tels qu'un téléphone portable, un smartphone (téléphone intelligent en anglais), une tablette, une télévision connectée à un réseau de communication, un ordinateur personnel sur lequel une application de téléphonie, aussi appelé softphone, est installée, ou tout objet connecté à un réseau de communication.

Plus particulièrement, les terminaux TE et TR sont aptes à communiquer via le réseau de communication RES au cours d'une communication établie en mode audio ou visiophonique, ou au cours d'une communication établie en mode texte ou dessin telle que lors d'une session de messagerie instantanée.

Selon un mode particulier de réalisation de l'invention, le terminal TE et le terminal TR sont aptes à établir une communication selon la technologie WebRTC. Une telle technologie WebRTC permet d'établir des communications entre le terminal TE et le terminal TR sur un réseau de communication IP, par exemple le réseau de communication RES, via le navigateur Internet de chaque terminal.

Selon ce mode particulier de réalisation de l'invention, l'environnement de la figure 1 comprend un serveur d'application SERV gérant la signalisation d'une communication à établir entre les terminaux TE et TR. Le serveur d'application SERV enregistre les terminaux TE et TR lorsque ceux-ci signalent au serveur d'application SERV qu'ils sont disponibles pour communiquer selon le protocole WebRTC. Le serveur d'application SERV maintient un premier canal de communication ouvert avec le terminal TE et un deuxième canal de communication ouvert avec le terminal TR. De tels canaux de communication permettent au serveur d'application SERV de recevoir une demande de communication en provenance du terminal TE ou du terminal TR à destination d'un autre terminal ou d'informer le terminal TE ou le terminal TR qu'une demande de communication lui est destinée. Lorsqu'une communication est établie entre les terminaux TE et TR, les flux de données de la communication ne transitent pas par le serveur d'application SERV, mais directement en point à point entre les terminaux TE et TR, via le réseau de communication RES. Selon un autre mode particulier de réalisation de l'invention, le terminal TE et le terminal TR sont aptes à établir une communication selon le protocole SIP (pour Session Initiation Protocol).

Selon cet autre mode particulier de réalisation de l'invention, la signalisation d'une communication à établir entre les terminaux TE et TR est gérée par des serveurs d'application du coeur IMS du réseau de communication RES. Afin de recevoir ou émettre une communication, le terminal TE, respectivement TR, s'enregistre auprès du coeur du réseau de communication RES, par l'envoi d'un message SIP REGISTER. L'établissement d'une communication entre le terminal TE et le terminal TR est fait par l'échange de messages SIP (INVITE, 180 Ringing, 200OK, ACK) entre les terminaux TE et TR, via le coeur du réseau de communication RES. Lorsqu'une communication est établie entre les terminaux TE et TR, les flux de données de la communication transitent directement en point à point entre les terminaux TE et TR, via le réseau de communication RES.

La figure 2 illustre schématiquement des étapes du procédé de demande d'une communication mis en oeuvre par le terminal TE de la figure 1 et des étapes du procédé de communication mis en oeuvre par le terminal TR de la figure 1, selon un mode particulier de réalisation de l'invention. Les étapes de la figure 2 sont décrites en relation avec la technologie WebRTC.

Au cours d'une étape E1, l'utilisateur du terminal TE démarre le service de communication de son terminal en démarrant une exécution du navigateur Internet installé sur le terminal TE.

Au cours d'une étape E2, le terminal TE ouvre un canal de communication avec le serveur d'application SERV du réseau de communication RES et souscrit à des notifications de demande de communication qui lui sont destinées. Le terminal TE informe ainsi le serveur d'application SERV que le terminal TE est disponible pour communiquer. Pour cela, au cours de l'étape E2, le terminal TE envoie au serveur d'application SERV une requête HTTP comprenant :
- une indication relative à une adresse IP du terminal TE, associée à une indication d'une identité associée au terminal TE,
- une indication relative aux contacts avec lesquels l'utilisateur du terminal TE accepte de communiquer, ici la requête comprend une identité associée à l'utilisateur du terminal TR,
- une indication relative au mode de communication selon lequel l'utilisateur du terminal TE accepte de communiquer, ici la requête comprend un mode de communication voix et texte.

Le terminal TE peut envoyer une requête distincte pour chaque mode de communication selon lequel l'utilisateur du terminal TE accepte de communiquer. Par exemple, le terminal TE peut envoyer une première requête indiquant le mode de communication voix et une deuxième requête indiquant le mode de communication texte. Le terminal TE peut aussi envoyer d'autres requêtes relatives à d'autres modes de communication selon lesquels l'utilisateur du terminal TE accepte de communiquer.

Le terminal TE peut aussi envoyer d'autres requêtes relatives à d'autres contacts avec lesquels l'utilisateur du terminal TE accepte de communiquer.

Suite à l'étape E2, le terminal TE a souscrit aux notifications de demandes de communication en mode voix et texte émises ultérieurement par le terminal TR à destination du terminal TE.

Au cours d'une étape E1', l'utilisateur du terminal TR démarre le service de communication de son terminal en démarrant une exécution du navigateur Internet installé sur le terminal TR.

Au cours d'une étape E2', le terminal TR ouvre un canal de communication avec le serveur d'application SERV du réseau de communication RES et souscrit à des notifications de demande de communication qui lui sont destinées. Le terminal TR informe ainsi le serveur d'application SERV que le terminal TR est disponible pour communiquer. Pour cela, au cours de l'étape E2', le terminal TR envoie au serveur d'application SERV une requête HTTP comprenant :
- une indication relative à une adresse IP du terminal TR, associée à une indication d'une identité associée au terminal TR,
- une indication relative aux contacts avec lesquels l'utilisateur du terminal TR accepte de communiquer, ici la requête comprend une identité associée à l'utilisateur du terminal TE,
- une indication relative au mode de communication selon lequel l'utilisateur du terminal TR accepte de communiquer, ici la requête comprend un mode de communication voix et texte.

Une telle requête HTTP peut par exemple être une requête « subscribeObject ».

Le terminal TR peut envoyer une requête distincte pour chaque mode de communication selon lequel l'utilisateur du terminal TR accepte de communiquer. Par exemple, le terminal TR peut envoyer une première requête indiquant le mode de communication voix et une deuxième requête indiquant le mode de communication texte. Le terminal TR peut aussi envoyer d'autres requêtes relatives à d'autres modes de communication selon lesquels l'utilisateur du terminal TR accepte de communiquer.

Le terminal TR peut aussi envoyer d'autres requêtes relatives à d'autres contacts avec lesquels l'utilisateur du terminal TR accepte de communiquer.

Suite à l'étape E2', le terminal TR a souscrit aux notifications de demandes de communication en mode voix et texte émises ultérieurement par le terminal TE à destination du terminal TR.

Au cours d'une étape E3, l'utilisateur du terminal TE déclenche via le navigateur Internet exécuté par le terminal TE une demande de communication en mode voix à destination de l'utilisateur du terminal TR, par exemple en cliquant sur un lien associé à l'utilisateur du terminal TR. Un tel lien est par exemple compris dans une page web d'un annuaire affichée par le navigateur Internet. Suite à l'étape E3, au cours d'une étape E4, le terminal TE envoie au serveur d'application SERV une demande de communication avec le terminal TR sous la forme d'une requête HTTP « setObject » comprenant des informations permettant au terminal TR d'établir une communication avec le terminal TE. De telles informations sont :
- une indication relative à l'émetteur de la demande de communication : l'utilisateur du terminal TE,
- une indication relative au destinataire de la demande de communication : l'utilisateur du terminal TR,
- une indication relative au mode de communication demandé : le mode voix,
- une indication relative à l'état de la communication, ici la communication est à l'état «ringing ».

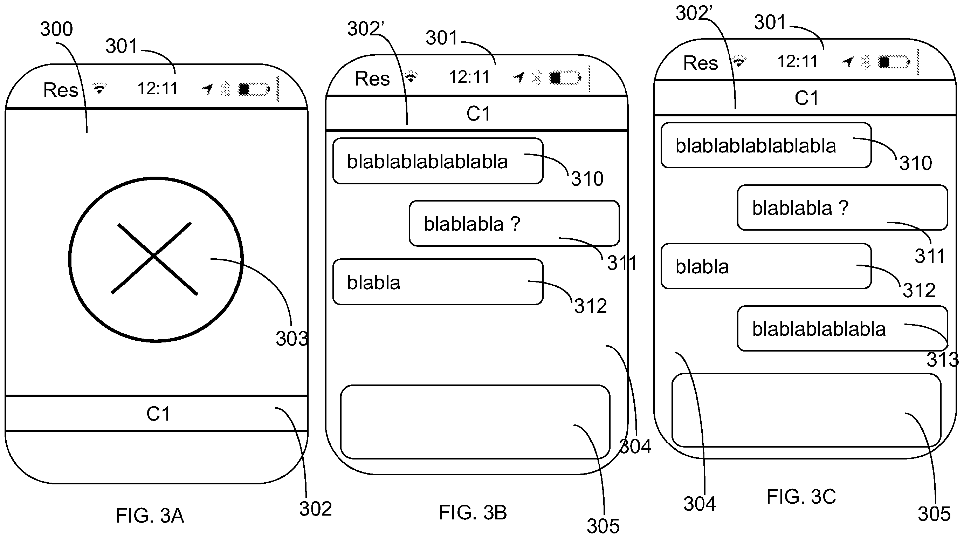

Au cours de l'étape E4, le terminal TE ayant envoyé une demande de communication à destination du terminal TR, le terminal TE modifie son affichage pour afficher une interface informant l'utilisateur du terminal TE qu'une demande de communication est en cours. Une telle interface est par exemple illustrée par la figure 3A.

La figure 3A illustre un écran du terminal TE lorsqu'une demande de communication est en cours de traitement. La figure 3A comprend une zone 301 dans laquelle des informations générales relatives au terminal TE sont affichées telles que le nom du réseau mobile auquel le terminal TE est connecté (Res), la puissance du signal nécessaire à la connexion à un tel réseau, l'heure, un symbole indiquant si la technologie Bluetooth© du terminal est activée, le niveau de charge de la batterie du terminal.

La figure 3A comprend une zone 300 représentant une interface informant l'utilisateur du terminal TE qu'une demande de communication en mode voix est en cours. La zone 300 comprend une zone 302 dans laquelle est affichée une indication (C1) relative au destinataire de la demande de communication en cours. Une telle indication C1 correspond par exemple au nom de l'utilisateur du terminal TR. La zone 300 comprend également un symbole 303 indiquant que la demande de communication en mode voix est en cours. Un tel symbole peut être activé par l'utilisateur du terminal TE s'il souhaite par exemple mettre fin à la demande de communication à destination du terminal TR avant l'établissement de la communication.

Au cours d'une étape E5, suite à la réception par le serveur d'application SERV de la demande de communication selon le mode de communication voix envoyée par le terminal TE au cours de l'étape E4, le serveur d'application SERV détecte que le terminal TR s'est enregistré auprès de lui lors l'étape E2' et que le terminal TR accepte de communiquer avec le terminal TE selon le mode de communication voix. Au cours de l'étape E5, le serveur d'application SERV envoie au terminal TR une notification de demande de communication sous la forme d'une requête HTTP « onObject » comprenant :
- une indication relative à l'émetteur de la demande de communication : l'utilisateur du terminal TE,
- une indication relative au destinataire de la demande de communication : l'utilisateur du terminal TR,
- une indication relative au mode de communication demandé : le mode voix,
- une indication relative à l'état de la communication, ici la communication est à l'état «ringing ».

Le terminal TR reçoit une telle notification au cours de l'étape E5. Selon la technologie WebRTC, une telle notification correspond à une demande de communication.

Au cours d'une étape E6, le terminal TR déclenche alors une présentation de la demande de communication à l'utilisateur du terminal TR. Une telle présentation de la demande de communication correspond par exemple au déclenchement d'une sonnerie informant l'utilisateur du terminal TR de la réception de la demande de communication. Au cours de l'étape E6, le terminal TR modifie également son affichage afin d'afficher une interface de présentation de la demande de communication reçue au cours de l'étape E5. L'interface de présentation de la demande de communication propose à l'utilisateur du terminal TR au moins un mode de communication différent du mode de communication demandé dans la demande de communication.

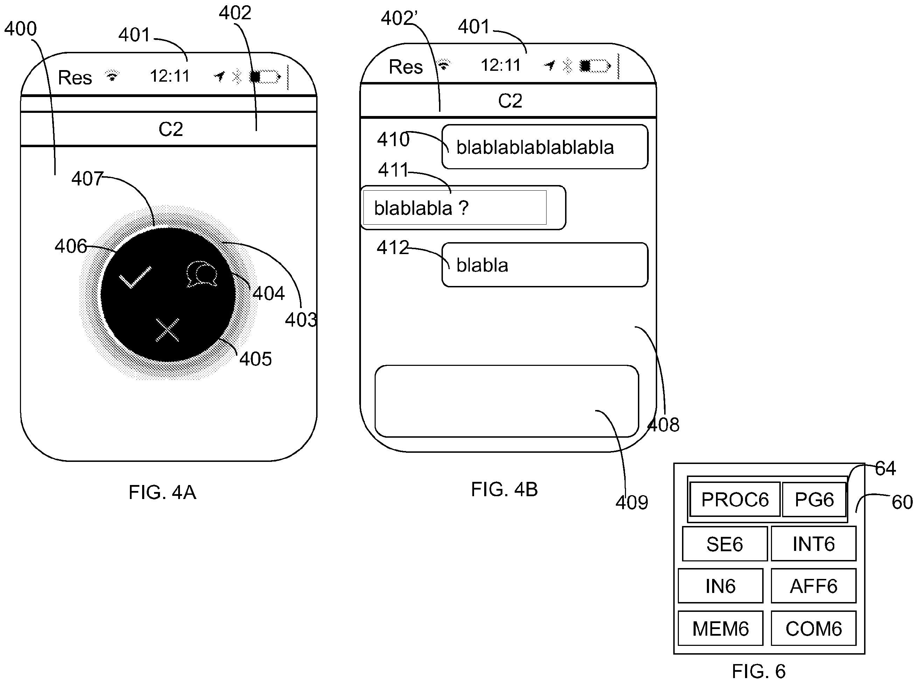

Un exemple d'une interface de présentation de la demande de communication est illustrée par la figure 4A selon un mode particulier de réalisation de l'invention.

La figure 4A illustre un écran du terminal TR lorsqu'une demande de communication reçue est présentée à l'utilisateur du terminal TR. La figure 4A comprend une zone 401 dans laquelle des informations générales relatives au terminal TR sont affichées telles que le nom du réseau mobile auquel le terminal TR est connecté (Res), la puissance du signal nécessaire à la connexion à un tel réseau, l'heure, un symbole indiquant si la technologie Bluetooth© du terminal est activée, le niveau de charge de la batterie du terminal.

La figure 4A comprend une zone 400 représentant une interface informant l'utilisateur du terminal TR de la réception d'une demande de communication en mode voix. La zone 400 comprend une zone 402 dans laquelle est affichée une indication (C2) relative à l'émetteur de la demande de communication. Une telle indication C2 correspond par exemple au nom de l'utilisateur du terminal TE. La zone 400 comprend également un symbole 403 présentant trois zones 404, 405 et 406 relatives à trois modes de réponse possibles à la demande de communication. Chaque zone 404, 405 et 406 peut être activée par l'utilisateur du terminal TR lorsqu'il sélectionne un mode de réponse.

Dans la zone 406, le mode de réponse présenté correspond au mode d'acceptation de la demande de communication en mode voix. Si l'utilisateur sélectionne ce mode de réponse, la communication sera établie entre le terminal TE et le terminal TR selon le mode de communication voix ou audio.

Dans la zone 405, le mode de réponse présenté correspond au mode de refus de la demande de communication. Si l'utilisateur sélectionne ce mode de réponse, la demande de communication sera refusée par le terminal TR. Dans ce cas, le terminal TE verra sa demande de communication échoué et sera éventuellement redirigé vers un serveur de messagerie sur lequel il pourra déposer un message à destination de l'utilisateur du terminal TR.

Dans la zone 404, le mode de réponse présenté correspond au mode d'acceptation de la demande de communication selon un autre mode de communication. Un tel autre mode de communication est différent du mode de communication proposé dans la demande de communication reçue.

Par exemple, l'autre mode de communication correspond à un mode de communication texte. Si l'utilisateur sélectionne le mode de réponse présenté dans la zone 404, la communication sera établie en mode texte entre le terminal TE et le terminal TR.

Selon un mode particulier de réalisation de l'invention, préalablement à la modification de l'affichage du terminal TR, au cours de l'étape E6, l'autre mode de communication est déterminé par le terminal TR en fonction d'une indication stockée sur le terminal TR et associée à l'utilisateur du terminal TE. Par exemple, le terminal TR stocke une information relative aux habitudes ou aux préférences de communication entre le terminal TR et le terminal TE, notamment une information relative au mode de communication utilisé lors de communications établies antérieurement entre le terminal TR et le terminal TE. Ce mode particulier de réalisation permet d'adapter l'autre mode de communication en fonction de l'émetteur de la demande de communication. Par exemple, l'autre mode de communication déterminé selon ce mode particulier de réalisation de l'invention est le mode de communication texte.

Selon un autre mode particulier de réalisation de l'invention, la zone 400 peut comprendre d'autres modes de communication possibles pour établir la communication demandée pouvant être sélectionnés par l'utilisateur (non représentés). Par exemple, le terminal TR peut proposer un mode de communication de dessin ou un mode de communication vidéo.

Selon un autre mode particulier de réalisation de l'invention, la zone 400 comprend une information visuelle 407 indiquant le temps restant avant que le terminal TR rejette la demande de communication. Cette information visuelle 407 permet d'indiquer à l'utilisateur du terminal TR le temps restant pour sélectionner un mode de réponse possible à la demande de communication. Suite à l'étape E6 au cours de laquelle le terminal TR modifie son affichage pour présenter la demande de communication reçue, l'utilisateur du terminal TR sélectionne, au cours d'une étape E7, le mode de réponse présenté dans la zone 404 de l'interface 400 de la figure 4A. La sélection d'un tel mode de réponse correspond à la sélection d'un autre mode de communication utilisé pour établir la communication demandée. L'utilisateur du terminal TR a ici sélectionné le mode de communication texte.

Au cours d'une étape E8, le terminal TR envoie alors à destination du terminal TE un message d'acceptation de la demande de communication. Le message d'acceptation est envoyé via le serveur d'application SERV sous la forme une requête HTTP « setObject » comprenant une indication de l'état de la demande de communication reçue lors de l'étape E5 indiquant un état de basculement de la communication en mode voix ou audio vers une communication en mode texte. Ainsi, le message d'acceptation envoyé par le terminal TR comprend l'autre mode de communication sélectionné par l'utilisateur du terminal TR.

Lors d'une étape E9, suite à la réception par le serveur d'application SERV de la requête envoyée par le terminal TR lors de l'étape E8, le serveur d'application SERV transmet au terminal TE le message d'acceptation de la demande de communication envoyé par le terminal TR sous la forme d'une requête HTTP « onObject » comprenant une indication de l'état de basculement de la communication en mode voix ou audio vers une communication en mode texte. Le terminal TE reçoit le message d'acceptation de la demande de communication lors de l'étape E9, un tel message d'acceptation comprenant l'autre mode de communication sélectionné par l'utilisateur du terminal TR.

Lors d'une étape E10, le terminal TE modifie alors son affichage de sorte à afficher une interface de communication relative au mode de communication compris dans le message d'acceptation reçu à l'étape E9, ici le mode de communication texte. Une telle modification de l'affichage est par exemple illustrée par la figure 3B.

La figure 3B illustre un écran du terminal TE comprenant une zone 301 dans laquelle des informations générales relatives au terminal TE sont affichées telles que le nom du réseau mobile auquel le terminal est connecté (RES), la puissance du signal nécessaire à la connexion à un tel réseau, l'heure, un symbole indiquant si la technologie Bluetooth© du terminal est activée, le niveau de charge de la batterie du terminal.

L'écran comprend également une interface de communication 304 comprenant :
- un groupe de messages (310-312) échangés entre l'utilisateur du terminal TE et l'utilisateur du terminal TR au cours de communications établies antérieurement. Les messages affichés sur le côté gauche de l'écran et représentés avec un fond plus sombre (310, 312) correspondent aux messages reçus par le terminal TE en provenance du terminal TR. Les messages affichés sur le côté droit de l'écran et représentés avec un fond plus clair (311) correspondent aux messages émis par le terminal TE à destination du terminal TR.
- une zone 302' dans laquelle est affichée une information C1 associée à l'utilisateur du terminal avec lequel les messages affichés ont été échangés, ici l'utilisateur du terminal TR. Une telle information C1 correspond par exemple au nom de l'utilisateur du terminal TR.
- une zone 305 de composition de messages dans laquelle l'utilisateur du terminal TE peut composer un message texte destiné à l'utilisateur du terminal TR.

Lors d'une étape E11, le terminal TR modifie son affichage de sorte à afficher une interface de communication relative à l'autre mode de communication sélectionné. Une telle modification de l'affichage est par exemple illustrée par la figure 4B.

La figure 4B illustre un écran du terminal TR comprenant une zone 401 dans laquelle des informations générales relatives au terminal TR sont affichées telles que le nom du réseau mobile auquel le terminal est connecté (RES), la puissance du signal nécessaire à la connexion à un tel réseau, l'heure, un symbole indiquant si la technologie Bluetooth© du terminal est activée, le niveau de charge de la batterie du terminal.

L'écran comprend également une interface de communication 408 comprenant :
- un groupe de messages (410-412) échangés entre l'utilisateur du terminal TE et l'utilisateur du terminal TR au cours de communications établies antérieurement. Les messages affichés sur le côté droit de l'écran et représentés avec un fond plus clair (410, 412) correspondent aux messages reçus par le terminal TR en provenance du terminal TE. Les messages affichés sur le côté gauche de l'écran et représentés avec un fond plus sombre (411) correspondent aux messages émis par le terminal TR à destination du terminal TE.
- une zone 402' dans laquelle est affichée une information C2 associée à l'utilisateur du terminal avec lequel les messages affichés ont été échangés, ici l'utilisateur du terminal TE. Une telle information C2 correspond par exemple au nom de l'utilisateur du terminal TE.
- une zone 409 de composition de messages dans laquelle l'utilisateur du terminal TR peut composer un message texte destiné à l'utilisateur du terminal TE.

Au cours d'une étape E12, l'utilisateur du terminal TR compose un message dans la zone 409 de composition à destination de l'utilisateur du terminal TE. Lorsque le message est validé par l'utilisateur du terminal TR via une touche de validation de l'interface 408 (non représentée), le message est envoyé à destination du terminal TE au cours de l'étape E12. L'envoi du message composé au cours de l'étape E12 par le terminal TR équivaut à l'envoi d'une demande de communication selon le mode de communication texte, émise par le terminal TR à destination du terminal TE. L'envoi d'une telle demande de communication texte permet l'établissement d'une communication entre le terminal TE et le terminal TR selon le mode de communication texte.

Le message composé est envoyé, via le serveur d'application SERV, sous la forme d'une requête HTTP « setObject » comprenant des informations permettant au terminal TE d'établir une communication avec le terminal TR. De telles informations sont :
- une indication relative à l'émetteur de la demande de communication : l'utilisateur du terminal TR,
- une indication relative au destinataire de la demande de communication : l'utilisateur du terminal TE,
- une indication relative au mode de communication demandé : le mode texte,
- le message composé.

Lors de l'étape E12, le serveur d'application SERV reçoit la requête envoyée par le terminal TR. Au cours d'une étape E13, le serveur d'application SERV transmet au terminal TE le message composé sur le terminal TR sous la forme d'une requête HTTP « onObject » comprenant :
- une indication relative à l'émetteur de la demande de communication : l'utilisateur du terminal TR,
- une indication relative au destinataire de la demande de communication : l'utilisateur du terminal TE,
- une indication relative au mode de communication demandé : le mode texte,
- le message composé.

Le terminal TE reçoit la requête envoyée par le serveur d'application SERV lors de l'étape E13. La réception d'une telle requête permet d'établir une session de communication en message texte entre le terminal TE et le terminal TR. Les terminaux TE et TR peuvent alors communiquer au cours d'une étape E14, via des échanges de messages texte sans passer par le serveur d'application SERV.

Le message reçu par le terminal TE au cours de l'étape E13 est alors affiché par le terminal TE dans l'interface 304 comprenant les messages échangés avec le terminal TR déjà affichée par le terminal TE. La figure 3C illustre par exemple un tel message 313.

Selon un mode particulier de réalisation de l'invention, les caractères du message composé par l'utilisateur du terminal TR au cours de l'étape E11 sont envoyés à destination du terminal TE dès leur introduction dans la zone 409 de composition de message. Le premier caractère du message est envoyé sous la forme d'une requête HTTP « setObject » telle que décrite précédemment.

Les caractères suivants du message sont envoyés selon le protocole de transport de données utilisé au cours de la session de communication en mode texte.

Lors de la réception par le terminal TE d'un caractère du message composé par l'utilisateur du terminal TR, le terminal TE affiche chaque caractère reçu dès sa réception. L'utilisateur du terminal TE peut alors lire le message en cours de composition sans avoir à attendre la validation du message par l'utilisateur du terminal TR.

Selon l'invention, la modification de l'affichage du terminal TE lors de l'étape E10 et la réception du message composé lors de l'étape E13 permettent d'informer l'utilisateur du terminal TE de l'acceptation par le terminal TR de la demande de communication initiée lors de l'étape E4 par le terminal TE, selon un autre mode de communication différent du mode de communication initialement demandé. L'utilisateur du terminal TE n'a pas besoin d'interagir sur son terminal TE pour connaitre la réponse à la demande de communication du terminal TR ou pour modifier la mode de communication.

De plus, la modification de l'affichage du terminal TR lors de l'étape E11 suite à l'acceptation de la demande de communication reçue au cours de l''étape E5 selon un autre mode de communication, permet d'éviter à l'utilisateur du terminal TR d'interagir sur son terminal TR pour modifier l'application de communication qu'il souhaite utiliser pour communiquer avec le terminal TE. L'envoi du message composé lors de l'étape E12 permet d'établir une session de communication selon l'autre mode de communication souhaité par l'utilisateur du terminal TR sans que celui-ci n'ait à interagir sur son terminal.

En variante, l'établissement de la session de communication selon l'autre mode de communication peut être fait à l'initiative du terminal TE si l'utilisateur du terminal TE compose un message dans la zone de composition 305 avant la réception d'un message composé par l'utilisateur du terminal TR. L'établissement d'une telle session de communication est alors réalisé par l'envoi d'une requête HTTP « setObject » similaire à celle décrite en relation avec l'étape E12 mais envoyée par le terminal TE.

Le mécanisme qui vient d'être décrit s'applique également aux cas où l'autre mode de communication est un mode de communication en mode dessin en temps réel.

En variante, l'autre mode de communication peut être un mode de communication audio ou vidéo. Par exemple, lors de l'étape E4, la demande de communication initiale peut être une demande de communication selon le mode texte. Lors de l'étape E7, l'utilisateur du terminal TR peut choisir un mode de communication audio en tant qu'autre mode de communication. Lors de l'étape E10, respectivement E11, le terminal TE, respectivement TR, modifie son affichage de sorte à afficher une interface relative à l'application de communication utilisée pour communiquer selon le mode de communication audio. Dans ce cas, la session de communication selon le mode de communication audio est alors établie via l'envoi par le terminal TR lors de l'étape E12, d'une demande de communication audio sous la forme d'une requête HTTP « setObject » indiquant le mode de communication audio. L'envoi d'une telle demande de communication est réalisé automatiquement par le terminal TR, suite à la modification de l'affichage du terminal TR. Après la sélection de l'autre mode de communication par l'utilisateur du terminal TR (ici le mode de communication audio), l'utilisateur du terminal TR n'a pas besoin d'effectuer d'autres interactions supplémentaires sur son terminal TR pour établir la session de communication selon l'autre mode de communication.

De manière générale, le procédé de demande de communication et le procédé de communication qui viennent d'être décrits peuvent aussi être mis en oeuvre selon tout type de protocole de communications.

Selon un autre mode particulier de réalisation de l'invention, le procédé de demande de communication et le procédé de communication peuvent être mis en oeuvre selon le protocole SIP. Selon cet autre mode particulier de réalisation de l'invention, les étapes E2 et E2' sont réalisées par l'envoi d'un message SIP REGISTER au coeur de réseau de communication RES. Lors de l'étape E4, la demande de communication est envoyée sous la forme d'un message SIP INVITE. Lors de l'étape E8, le message d'acceptation de la demande de communication selon l'autre mode de communication est envoyé sous la forme d'un message SIP 380 ALTERNATE SERVICE comprenant dans le corps d'un tel message une indication portant sur l'autre mode de communication sélectionné lors de l'étape E7. La réception d'un tel message par le terminal TE lors de l'étape E9 déclenche alors la modification de l'affichage du terminal TE pour afficher une interface de communication relative à l'autre mode de communication.

L'envoi d'un tel message par le terminal TR lors de l'étape E8 déclenche la modification de l'affichage du terminal TR pour afficher une interface de communication relative à l'autre mode de communication.

La session de communication selon l'autre mode de communication sélectionné lors de l'étape E7 est établie par l'envoi par le terminal TR d'un message SIP INVITE au cours de l'étape E12. Lorsque l'autre mode de communication sélectionnée lors de l'étape E7 est un mode de communication texte ou de dessin, l'envoi d'un tel message est par exemple réalisé suite à la composition d'un message texte ou d'un dessin par l'utilisateur du terminal TR.

Lorsque l'autre mode de communication sélectionnée lors de l'étape E7 est un mode de communication audio ou vidéo, l'envoi d'un tel message est réalisé suite à la modification de l'affichage du terminal TR lors de l'étape E11.

Selon cet autre mode particulier de réalisation de l'invention, en réponse au message SIP INVITE reçu par le terminal TE lors de l'étape E13, en provenance du terminal TR, le terminal TE accepte la demande de communication par l'envoi d'un message SIP 200OK au terminal TR. Un tel message est acquitté par le terminal TR par l'envoi au terminal TE d'un message SIP ACK. La session de communication selon l'autre mode de communication est ainsi établie entre le terminal TE et le terminal TR. Au cours de l'étape E14, le terminal TE et le terminal TR communiquent alors par exemple par l'échange de données selon le protocole RTP.

La figure 5 illustre un dispositif apte à mettre en oeuvre le procédé de demande de communication selon un mode particulier de réalisation de l'invention.

Le dispositif 50 est apte à mettre en oeuvre le procédé de demande de communication entre un terminal émetteur de ladite demande de communication et un terminal récepteur selon un mode particulier de réalisation de l'invention décrit en relation avec la figure 2.

Le dispositif 50 comprend un module de traitement 54, comprenant notamment un module de stockage MEM, par exemple une mémoire, et une unité de traitement PROC, équipée par exemple d'un microprocesseur. L'unité de traitement PROC est pilotée par un programme d'ordinateur PG mettant en oeuvre le procédé de demande de communication entre un terminal émetteur de ladite demande de communication et un terminal récepteur tel que décrit en relation avec la figure 2.

A l'initialisation, les instructions de code du programme d'ordinateur PG sont par exemple chargées en mémoire MEM avant d'être exécutées par le processeur de l'unité de traitement PROC.

Le processeur de l'unité de traitement PROC met en oeuvre les étapes du procédé de demande de communication entre un terminal émetteur de ladite demande de communication et un terminal récepteur, selon les instructions du programme d'ordinateur PG. Le processeur de l'unité de traitement PROC met notamment en oeuvre :
- une étape de réception par le terminal émetteur d'un message d'acceptation de la demande de communication, le message d'acceptation comprenant un autre mode de communication différent du mode de communication proposé,
- suite à l'étape de réception du message d'acceptation, une étape de modification de l'affichage d'un dispositif d'affichage associé au terminal émetteur de sorte qu'une interface de communication relative audit autre mode de communication soit affichée,
- une étape de communication entre le terminal récepteur et le terminal émetteur selon ledit autre mode de communication, via ladite interface de communication.

Le dispositif 50 comprend également un dispositif d'affichage AFF, tel qu'un écran intégré au dispositif 50 ou connecté au dispositif 50.

L'affichage sur le dispositif d'affichage AFF est contrôlé par une interface d'affichage INT. L'interface d'affichage INT est elle-même contrôlée par le processeur de l'unité de traitement PROC selon les instructions de code du programme d'ordinateur PG et du système d'exploitation SE du dispositif 50.

Le dispositif 50 comporte également un module de communication COM permettant au dispositif 50 de se connecter à un réseau de communication et d'échanger des données avec des terminaux connectés à ce réseau de communication, ou d'établir des communications avec d'autres terminaux. Le module de communication COM est apte à envoyer une demande de communication à destination du terminal récepteur et à recevoir un message d'acceptation en provenance du terminal récepteur.

Sur réception par le module de communication COM du message d'acceptation comprenant l'autre mode de communication, le module de traitement 54 commande l'interface d'affichage INT selon les instructions de code du programme d'ordinateur PG afin de modifier l'affichage sur le dispositif d'affichage AFF.

Selon un mode particulier de réalisation de l'invention, le dispositif 50 est compris dans un terminal, tel qu'un terminal mobile, ou fixe, ou une tablette.

La figure 6 illustre un dispositif apte à mettre en oeuvre le procédé de communication selon un mode particulier de réalisation de l'invention.

Le dispositif 60 est apte à mettre en oeuvre le procédé de communication entre un terminal émetteur d'une demande de communication et un terminal récepteur selon un mode particulier de réalisation de l'invention décrit en relation avec la figure 2.

Le dispositif 60 comprend un module de traitement 64, comprenant notamment un module de stockage MEM6, par exemple une mémoire, et une unité de traitement PROC6, équipée par exemple d'un microprocesseur. L'unité de traitement PROC6 est pilotée par un programme d'ordinateur PG6 mettant en oeuvre le procédé de communication entre un terminal émetteur d'une demande de communication et un terminal récepteur tel que décrit en relation avec la figure 2.

A l'initialisation, les instructions de code du programme d'ordinateur PG6 sont par exemple chargées en mémoire MEM6 avant d'être exécutées par le processeur de l'unité de traitement PROC6.

Le processeur de l'unité de traitement PROC6 met en oeuvre les étapes du procédé de communication entre un terminal émetteur d'une demande de communication et un terminal récepteur, selon les instructions du programme d'ordinateur PG6. Le processeur de l'unité de traitement PROC6 met notamment en oeuvre :
- une étape de réception par le terminal récepteur de la demande de communication, la demande de communication comprenant un mode de communication proposé pour établir la communication demandée,
- suite à une interaction utilisateur effectuée sur le terminal récepteur indiquant la sélection d'un autre mode de communication différent du mode de communication proposé, une étape d'envoi au terminal émetteur d'un message d'acceptation, le message d'acceptation comprenant ledit autre mode de communication sélectionné,
- suite à l'étape d'envoi du message d'acceptation, une étape de modification de l'affichage d'un dispositif d'affichage associé au terminal récepteur de sorte qu'une interface de communication relative audit autre mode de communication soit affichée,
- une étape de communication entre le terminal récepteur et le terminal émetteur selon ledit autre mode de communication, via ladite interface de communication.

Le dispositif 60 comprend également un dispositif d'affichage AFF6, tel qu'un écran intégré au dispositif 60 ou connecté au dispositif 60.

L'affichage sur le dispositif d'affichage AFF6 est contrôlé par une interface d'affichage INT6. L'interface d'affichage INT6 est elle-même contrôlée par le processeur de l'unité de traitement PROC6 selon les instructions de code du programme d'ordinateur PG6 et du système d'exploitation SE6 du dispositif 60.

Le dispositif 60 comporte un module d'interaction utilisateur IN6 permettant à un utilisateur d'interagir sur le dispositif 60. Le module d'interaction utilisateur IN6 permet notamment à un utilisateur d'indiquer la sélection d'un autre mode de communication différent du mode de communication proposé, lors de la réception de la demande de communication en provenance du terminal émetteur.

Selon un mode particulier de réalisation de l'invention, le module d'interaction utilisateur IN6 est une interface tactile.

Selon un autre mode particulier de réalisation de l'invention, le module d'interaction utilisateur IN6 est une interface tactile intégrée à l'écran associé au dispositif. L'écran associé au dispositif est alors un écran tactile.

Le dispositif 60 comporte également un module de communication COM6 permettant au dispositif 60 de se connecter à un réseau de communication et d'échanger des données avec des terminaux connectés à ce réseau de communication, ou d'établir des communications avec d'autres terminaux. Le module de communication COM6 est apte à recevoir une demande de communication en provenance du terminal émetteur et à envoyer un message d'acceptation comprenant l'autre mode de communication à destination du terminal émetteur.

Sur détection par le module d'interaction utilisateur IN6 d'une interaction utilisateur indiquant la sélection d'un autre mode de communication différent du mode de communication proposé dans la demande de communication reçue, le module d'interaction utilisateur IN6 communique avec le module de traitement 64 afin d'indiquer la détection de l'interaction utilisateur. Le module de traitement 64 commande alors l'interface d'affichage INT6 selon les instructions de code du programme d'ordinateur PG6 afin de modifier l'affichage sur le dispositif d'affichage AFF6. Le dispositif d'affichage AFF6 affiche alors une interface de communication relative à l'autre mode de communication.

Selon un mode particulier de réalisation de l'invention, le module de stockage MEM6 permet de stocker une information relative à l'utilisateur du terminal émetteur ou une indication relative aux habitudes de communication entre le terminal émetteur et le terminal récepteur. Le module de traitement 64 est apte à déterminer un autre mode de communication en fonction d'une telle information stockée par le module de stockage MEM6.

Selon un autre mode particulier de réalisation de l'invention, l'interface d'affichage INT est apte, sur commande du module de traitement 64, à commander l'affichage par le dispositif d'affichage AFF d'une interface comprenant une information visuelle indiquant le temps restant avant un rejet de la demande de communication par le terminal récepteur. Selon cet autre mode particulier de réalisation de l'invention, lorsque l'interface d'affichage INT commande l'affichage sur le dispositif d'affichage AFF d'une interface de sélection d'un mode de réponse suite à la réception de la demande de communication par le module de communication COM, un compteur de secondes est initialisé à zéro. Le compteur est augmenté de 1 à chaque seconde tant que la valeur du compteur n'atteint pas un seuil prédéterminé. Le seuil prédéterminé correspond au temps exprimé en secondes par exemple, avant que le terminal récepteur ne rejettent la demande de communication reçue. Lorsque le compteur atteint le seuil prédéterminé, si l'utilisateur du terminal récepteur n'a sélectionné aucun mode de réponse à la demande de communication, la demande de communication est rejetée par le terminal récepteur. Le module de traitement 64 commande l'interface d'affichage INT pour afficher périodiquement, par exemple toutes les secondes, une information représentative de la valeur du compteur. Une telle information représentative est par exemple illustrée par l'élément 407 de la figure 4A. L'élément 407 représente une couronne à l'intérieure de laquelle la zone grise représente le temps écoulé depuis le début de la présentation de la demande de communication et la zone blanche représente le temps restant avant le rejet de la demande de communication. A chaque modification de l'affichage par l'interface d'affichage INT, l'utilisateur du terminal récepteur peut voir l'évolution du compteur. Selon ce mode particulier de réalisation de l'invention, l'utilisateur du terminal récepteur est informé du temps restant avant le rejet de la demande de communication par le terminal récepteur.

Selon un mode particulier de réalisation de l'invention, le dispositif 60 est compris dans un terminal, tel qu'un terminal mobile, ou fixe, ou une tablette.

## Revendications

1. Procédé de communication entre un terminal émetteur d'une demande de communication et un terminal récepteur, comprenant l'étape de:
- réception (E5), par le terminal récepteur, de la demande de communication, la demande de communication comprenant un mode de communication proposé pour établir la communication demandée, le procédé **caractérisé par** les étapes suivantes :
- suite à la détection (E7) d'une interaction utilisateur indiquant la sélection d'un autre mode de communication, l'autre mode de communication étant différent du mode de communication proposé et non compris dans le mode de communication proposé, envoi (E8) au terminal émetteur d'un message d'acceptation, le message d'acceptation comprenant ledit autre mode de communication sélectionné,
- suite à l'envoi du message d'acceptation, modification (E11) de l'affichage d'un dispositif d'affichage associé au terminal récepteur de sorte qu'une interface de communication relative audit autre mode de communication soit affichée,
- communication (E12) entre le terminal récepteur et le terminal émetteur selon ledit autre mode de communication, via ladite interface de communication.

2. Procédé de communication selon la revendication 1, dans lequel le mode de communication proposé est un mode de communication audio ou vidéo.

3. Procédé de communication selon l'une quelconque des revendications 1 ou 2, dans lequel l'autre mode de communication est un mode de communication textuel ou de dessin en temps réel.

4. Procédé de communication selon l'une quelconque des revendications 1 à 3, comprenant une étape de détermination de l'autre mode de communication, en fonction d'une indication associée à un utilisateur du terminal émetteur de la demande de communication, ladite indication étant stockée sur le terminal récepteur.

5. Procédé de communication selon l'une quelconque des revendications 1 à 4, comprenant en outre une étape d'obtention d'un paramètre représentatif du temps restant avant un rejet de la demande de communication par le terminal récepteur et une étape de modification de l'affichage du dispositif d'affichage de sorte à afficher le paramètre obtenu.

6. Procédé de communication selon l'une quelconque des revendications 3 ou 4, dans lequel l'autre mode de communication est un mode de communication textuel et lorsqu'un message est composé via l'interface de communication affichée sur le dispositif d'affichage associé au terminal récepteur, le message composé est transmis caractère par caractère au terminal émetteur.

7. Procédé de demande d'une communication entre un terminal émetteur de ladite demande de communication et un terminal récepteur, la demande de communication comprenant un mode de communication proposé pour établir la communication demandée, le procédé **caractérisé par** les étapes suivantes:
- réception (E9), par le terminal émetteur, d'un message d'acceptation de la demande de communication, envoyé par le terminal récepteur suite à la détection (E7) d'une interaction utilisateur indiquant la sélection d'un autre mode de communication, le message d'acceptation comprenant un autre mode de communication différent du mode de communication proposé,
- suite à la réception du message d'acceptation, modification (E10) de l'affichage d'un dispositif d'affichage associé au terminal émetteur de sorte qu'une interface de communication relative audit autre mode de communication soit affichée,
- communication (E13) entre le terminal récepteur et le terminal émetteur selon ledit autre mode de communication, via ladite interface de communication.

8. Terminal (60) de communication comprenant un dispositif comprenant :
- un module de communication (COM6) apte :
∘ à recevoir une demande de communication en provenance d'un terminal émetteur, la demande de communication comprenant un mode de communication proposé pour établir la communication demandée,
∘ à envoyer, sur commande d'un module de traitement (64), au terminal émetteur un message d'acceptation comprenant un autre mode de communication différent du mode de communication proposé,
∘ à communiquer avec le terminal émetteur selon ledit autre mode de communication, via une interface de communication relative audit autre mode de communication,
le terminal **caractérisé en ce qu'**il comprend :
- un module de traitement (64) apte :
∘ à commander le module de communication suite à une interaction utilisateur effectuée sur le terminal de communication indiquant la sélection dudit autre mode de communication,
∘ à commander une interface d'affichage (INT6) pour modifier l'affichage d'un dispositif d'affichage (AFF6) associé au terminal de communication de sorte que ladite interface de communication relative audit autre mode de communication soit affichée.

9. Terminal (50) de demande d'une communication comprenant un dispositif comprenant :
- un module de communication (COM) apte :
∘ à envoyer à un terminal récepteur une demande de communication comprenant un mode de communication proposé pour établir la communication demandée,
∘ à recevoir un message d'acceptation de la demande de communication, le message d'acceptation comprenant un autre mode de communication différent du mode de communication proposé,
∘ à communiquer avec le terminal récepteur selon ledit autre mode de communication, via une interface de communication relative audit autre mode de communication, le terminal **caractérisé en ce qu'**il comprend :
- un module de traitement (54) apte à commander une interface d'affichage suite à la réception du message d'acceptation, envoyé par le terminal récepteur suite à la détection (E7) d'une interaction utilisateur indiquant la sélection d'un autre mode de communication, pour modifier l'affichage d'un dispositif d'affichage (AFF) associé au terminal de sorte que ladite interface de communication relative audit autre mode de communication soit affichée.

10. Programme d'ordinateur comportant des instructions de code de programme pour l'exécution des étapes du procédé de communication selon l'une quelconque des revendications 1 à 6 ou des étapes du procédé de demande de communication selon la revendication 7, lorsque le programme est exécuté par un processeur.

## Patentansprüche

1. Kommunikationsverfahren zwischen einem eine Kommunikationsanforderung sendenden Endgerät und einem empfangenden Endgerät, das den folgenden Schritt enthält:
- Empfang (E5) der Kommunikationsanforderung durch das empfangende Endgerät, wobei die Kommunikationsanforderung einen vorgeschlagenen Kommunikationsmodus enthält, um die angeforderte Kommunikation aufzubauen,
wobei das Verfahren durch die folgenden Schritte gekennzeichnet ist:
- nach der Erfassung (E7) einer Benutzerinteraktion, die die Auswahl eines anderen Kommunikationsmodus angibt, wobei der andere Kommunikationsmodus sich vom vorgeschlagenen Kommunikationsmodus unterscheidet und nicht im vorgeschlagenen Kommunikationsmodus enthalten ist, Senden (E8) einer Akzeptanznachricht an das sendende Endgerät, wobei die Akzeptanznachricht den anderen ausgewählten Kommunikationsmodus enthält,
- nach dem Senden der Akzeptanznachricht, Ändern (E11) der Anzeige einer dem empfangenden Endgerät zugeordneten Anzeigevorrichtung, damit eine Kommunikationsschnittstelle bezüglich des anderen Kommunikationsmodus angezeigt wird,
- Kommunikation (E12) zwischen dem empfangenden Endgerät und dem sendenden Endgerät gemäß dem anderen Kommunikationsmodus über die Kommunikationsschnittstelle.

2. Kommunikationsverfahren nach Anspruch 1, wobei der vorgeschlagene Kommunikationsmodus ein Audio- oder Video-Kommunikationsmodus ist.

3. Kommunikationsverfahren nach einem der Ansprüche 1 oder 2, wobei der andere Kommunikationsmodus ein Text- oder Bild-Kommunikationsmodus in Echtzeit ist.

4. Kommunikationsverfahren nach einem der Ansprüche 1 bis 3, das einen Schritt der Bestimmung des anderen Kommunikationsmodus abhängig von einer einem Benutzer des die Kommunikationsanforderung sendenden Endgeräts zugeordneten Angabe enthält, wobei die Angabe im empfangenden Endgerät gespeichert ist.

5. Kommunikationsverfahren nach einem der Ansprüche 1 bis 4, das außerdem einen Schritt des Erhalts eines für die verbleibende Zeit vor einer Zurückweisung der Kommunikationsanforderung durch das empfangende Endgerät repräsentativen Parameters und einen Schritt der Änderung der Anzeige der Anzeigevorrichtung enthält, um den erhaltenen Parameter anzuzeigen.

6. Kommunikationsverfahren nach einem der Ansprüche 3 oder 4, wobei der andere Kommunikationsmodus ein Text-Kommunikationsmodus ist, und wenn eine Nachricht über die auf der dem empfangenden Endgerät zugeordneten Anzeigevorrichtung angezeigte Kommunikationsschnittstelle verfasst wird, die verfasste Nachricht Zeichen für Zeichen an das sendende Endgerät übertragen wird.

7. Verfahren zur Anforderung einer Kommunikation zwischen einem die Kommunikationsanforderung sendenden Endgerät und einem empfangenden Endgerät, wobei die Kommunikationsanforderung einen zum Aufbau der angeforderten Kommunikation vorgeschlagenen Kommunikationsmodus enthält, wobei das Verfahren durch die folgenden Schritte gekennzeichnet ist:
- Empfang (E9) einer Akzeptanznachricht der Kommunikationsanforderung durch das sendende Endgerät, die vom empfangenden Endgerät nach der Erfassung (E7) einer Benutzerinteraktion gesendet wird, die die Auswahl eines anderen Kommunikationsmodus angibt, wobei die Akzeptanznachricht einen anderen Kommunikationsmodus enthält, der sich vom vorgeschlagenen Kommunikationsmodus unterscheidet,
- nach dem Empfang der Akzeptanznachricht, Änderung (E10) der Anzeige einer dem sendenden Endgerät zugeordneten Anzeigevorrichtung, damit eine Kommunikationsschnittstelle bezüglich des anderen Kommunikationsmodus angezeigt wird,
- Kommunikation (E13) zwischen dem empfangenden Endgerät und dem sendenden Endgerät gemäß dem anderen Kommunikationsmodus über die Kommunikationsschnittstelle.

8. Kommunikations-Endgerät (60), das eine Vorrichtung enthält, die enthält:
- ein Kommunikationsmodul (COM6), das:
∘ eine Kommunikationsanforderung von einem sendenden Endgerät empfangen kann, wobei die Kommunikationsanforderung einen vorgeschlagenen Kommunikationsmodus enthält, um die angeforderte Kommunikation aufzubauen,
∘ auf Befehl eines Verarbeitungsmoduls (64) eine Akzeptanznachricht an das sendende Endgerät senden kann, die einen anderen Kommunikationsmodus enthält, der sich vom vorgeschlagenen Kommunikationsmodus unterscheidet,
∘ mit dem sendenden Endgerät gemäß dem anderen Kommunikationsmodus über eine Kommunikationsschnittstelle kommunizieren kann, die sich auf den anderen Kommunikationsmodus bezieht,
wobei das Endgerät **dadurch gekennzeichnet ist, dass** es enthält:
- ein Verarbeitungsmodul (64), das:
∘ das Kommunikationsmodul nach einer am Kommunikations-Endgerät ausgeführten Benutzerinteraktion steuern kann, die die Auswahl des anderen Kommunikationsmodus angibt,
∘ eine Anzeigeschnittstelle (INT6) steuern kann, um die Anzeige einer dem Kommunikations-Endgerät zugeordneten Anzeigevorrichtung (AFF6) zu ändern, damit die Kommunikationsschnittstelle bezüglich des anderen Kommunikationsmodus angezeigt wird.

9. Endgerät (50) zur Anforderung einer Kommunikation, das eine Vorrichtung enthält, die enthält:
- ein Kommunikationsmodul (COM), das:
∘ an ein empfangendes Endgerät eine Kommunikationsanforderung senden kann, die einen vorgeschlagenen Kommunikationsmodus zum Aufbau der angeforderten Kommunikation enthält,
∘ eine Akzeptanznachricht der Kommunikationsanforderung empfangen kann, wobei die Akzeptanznachricht einen anderen Kommunikationsmodus enthält, der sich vom vorgeschlagenen Kommunikationsmodus unterscheidet,
∘ mit dem empfangenden Endgerät gemäß dem anderen Kommunikationsmodus über eine Kommunikationsschnittstelle kommunizieren kann, die sich auf den anderen Kommunikationsmodus bezieht, wobei das Endgerät **dadurch gekennzeichnet ist, dass** es enthält:
- ein Verarbeitungsmodul (54), das nach dem Empfang der Akzeptanznachricht, die vom empfangenden Endgerät nach der Erfassung (E7) einer Benutzerinteraktion gesendet wird, die die Auswahl eines anderen Kommunikationsmodus angibt, eine Anzeigeschnittstelle steuern kann, um die Anzeige einer dem Endgerät zugeordneten Anzeigevorrichtung (AFF) zu ändern, damit die Kommunikationsschnittstelle bezüglich des anderen Kommunikationsmodus angezeigt wird.

10. Computerprogramm, das Programmcodeanweisungen für die Ausführung der Schritte des Kommunikationsverfahrens nach einem der Ansprüche 1 bis 6 oder der Schritte des Verfahrens der Kommunikationsanforderung nach Anspruch 7 aufweist, wenn das Programm von einem Prozessor ausgeführt wird.

## Claims

1. Communication method between a terminal transmitting a communication request and a receiving terminal, comprising the step of:
- reception (E5), by the receiving terminal, of the communication request, the communication request including a communication mode proposed for setting up the requested communication,
the method **characterized by** the following steps:
- following the detection (E7) of a user interaction indicating the selection of another communication mode, the other communication mode being different from the proposed communication mode and not included in the proposed communication mode, sending (E8) to the transmitting terminal of an acceptance message, the acceptance message including said other selected communication mode,
- following the sending of the acceptance message, modification (E11) of the display of a display device associated with the receiving terminal so that a communication interface relating to said other communication mode is displayed,
- communication (E12) between the receiving terminal and the transmitting terminal according to said other communication mode, via said communication interface.

2. Communication method according to Claim 1, in which the proposed communication mode is an audio or video communication mode.

3. Communication method according to either one of Claims 1 and 2, in which the other communication mode is a real-time text or drawing communication mode.

4. Communication method according to any one of Claims 1 to 3, comprising a step of determination of the other communication mode, based on an indication associated with a user of the terminal transmitting the communication request, said indication being stored on the receiving terminal.

5. Communication method according to any one of Claims 1 to 4, further comprising a step of obtaining a parameter representative of the time remaining before a rejection of the communication request by the receiving terminal and a step of modification of the display of the display device so as to display the parameter obtained.

6. Communication method according to either one of Claims 3 and 4, in which the other communication mode is a text communication mode and, when a message is composed via the communication interface displayed on the display device associated with the receiving terminal, the composed message is sent character-by-character to the transmitting terminal.

7. Method for requesting a communication between a terminal transmitting said communication request and a receiving terminal, the communication request including a communication mode proposed for setting up the requested communication, the method **characterized by** the following steps:
- reception (E9), by the transmitting terminal, of a communication request acceptance message, sent by the receiving terminal following the detection (E7) of a user interaction indicating the selection of another communication mode, the acceptance message including another communication mode different from the proposed communication mode,
- following the reception of the acceptance message, modification (E10) of the display of a display device associated with the transmitting terminal so that a communication interface relating to said other communication mode is displayed,
- communication (E13) between the receiving terminal and the transmitting terminal according to said other communication mode, via said communication interface.

8. Communication terminal (60) comprising a device comprising:
- a communication module (COM6) capable:
∘ of receiving a communication request from a transmitting terminal, the communication request including a communication mode proposed for setting up the requested communication,
∘ of sending, on command from a processing module (64), to the transmitting terminal, an acceptance message including another communication mode different from the proposed communication mode,
∘ of communicating with the transmitting terminal according to said other communication mode, via a communication interface relating to said other communication mode,
the terminal **characterized in that** it comprises:
- a processing module (64) capable:
∘ of controlling the communication module following a user interaction performed on the communication terminal indicating the selection of said other communication mode,
∘ of controlling a display interface (INT6) to modify the display of a display device (AFF6) associated with the communication terminal so that said communication interface relating to said other communication mode is displayed.

9. Terminal (50) requesting a communication comprising a device comprising:
- a communication module (COM) capable:
∘ of sending, to a receiving terminal, a communication request including a communication mode proposed for setting up the requested communication,
∘ of receiving a communication request acceptance message, the acceptance message including another communication mode different from the proposed communication mode,
∘ of communicating with the receiving terminal according to said other communication mode, via a communication interface relating to said other communication mode, the terminal **characterized in that** it comprises:,
- a processing module (54) capable of controlling a display interface following the reception of the acceptance message, sent by the receiving terminal following the detection (E7) of a user interaction indicating the selection of another communication mode, to modify the display of a display device (AFF) associated with the terminal so that said communication interface relating to said other communication mode is displayed.

10. Computer program comprising program code instructions for executing the steps of the communication method according to any one of Claims 1 to 6 or the steps of the communication request method according to Claim 7, when the program is run by a processor.
